# EUROPEAN PATENT APPLICATION

(11) **EP 3 779 187 A1**
(43) Date of publication of application: **17.02.2021**
(21) Application number: 19191780.6
(22) Date of filing: 14.08.2019
(51) Int. Cl.: F03D 7/04, F03D 13/30

(54) **METHOD FOR COMPUTER-IMPLEMENTED DETERMINATION MAXIMIZATION OF ANNUAL ENERGY PRODUCTION OF WIND TURBINES OF A WIND PARK**

(71) Applicant: Siemens Gamesa Renewable Energy A/S, 7330 Brande (DK)
(72) Inventor: Azar, Ziad, Sheffield, South Yorkshire S10 4ED (GB); Clark, Richard, Worrall Sheffield, S35 0AF (GB); Duke, Alexander, Sheffield, S10 5SN (GB); Thomas, Arwyn, Cheshire, SK8 6HW (GB); Wu, Zhan-Yuan, Sheffield, South Yorkshire S10 4BB (GB)
(74) Representative: Aspacher, Karl-Georg

(57) **Abstract**

The invention describes a method for computer-implemented maximization of annual energy production of a number of wind turbines (T1,...,Tn) of a wind park. The method considers the impact of individual turbine manufacturing tolerances on the turbine performance, thereby avoiding under-utilization of those wind turbines. The invention comprises the steps of: receiving, by an interface (IF), one or more actual manufacturing tolerances of characteristic values (AG, MP, MDM, TC, CR) for each of the number of wind turbines (T1,...,Tn); determining, by a processing unit (PU), for each of the number of wind turbines (T1,...,Tn) a power versus wind speed map (PWM) which is calculated from a given turbine model (TM) with the one or more actual manufacturing tolerances of the respective wind turbines (T1,...,Tn) as input parameters; determine, based on the power versus wind speed map (PWM) of each of the number of wind turbines (T1,...,Tn) a respective performance measure; and assign a selected siting position for each wind turbine (T1,...,Tn) in the wind park according to its determined performance measure.

## Description

The invention relates to a method and a system for computer-implemented maximization of annual energy production of a number of wind turbines of a wind park.

The operation of wind turbines (short: turbines) is based on nominal parameters of the wind turbine which characterize the wind turbines in terms of power output in dependency of wind speed. Using the nominal parameters enables the manufacturer of the wind turbine to guarantee specific annual energy production (AEP) to customers as the wind turbines are treated as having identical performance over its contractual power speed curve and rated power point.

The nominal parameters therefore are used as a basis to derive turbine control parameters with regard to a specific power output at a specific ambient conditions, in particular wind speed. After placing a plurality of wind turbines in a wind park, the control parameters of each turbine are adjusted in such a way that the AEP is maximized. As the AEP can be regarded as a measure indicating the performance and/or efficiency of a turbine and a wind park, respectively, it would be desirable to be able to adapt the control parameters in a way to increase the AEP as much as possible without damaging effects for the turbine.

It is therefore an object of the present invention to provide a method and a system for computer-implemented maximization of annual energy production of a number of wind turbines of a wind park. It is a further object of the present invention to provide a computer program product.

These objects are solved by a method according to the features of claim 1, a computer program product according to claim 11 and a system according to the features of claim 12. Preferred embodiments are set out in the dependent claims.

According to a first aspect of the present invention, a method for computer-implemented maximization of annual energy production of a number of wind turbines of a wind park is suggested. The number of wind turbines of the wind park may be arbitrary, but greater than one. The wind turbines are preferably arranged in proximity to each other, to supply the total produced power at a single point to an energy grid.

The method comprises the steps of receiving, by an interface, one or more actual manufacturing tolerances of characteristic values for each of the number of wind turbines; determining, by a processing unit, for each of the number of wind turbines a power versus wind speed map which is calculated from a given turbine model with the one or more achieved manufacturing parameter within the manufacturing tolerance range of the respective wind turbines as input parameters; determining, by the processing unit, based on the power versus wind speed map of each of the number of wind turbines a respective performance measure; and assigning, by the processing unit, a selected siting position for each wind turbine in the wind park according to its determined performance measure.

The performance measure used to determine the siting position may be the annual energy production (AEP).

In the present invention the term "actual manufacturing tolerances" is to be understood as actual or achieved parameters within manufacturing tolerance ranges.

The method is based on the consideration that there may be an under-utilization of the wind turbines due to a lack of consideration of the impact of individual turbine manufacturing tolerances on its turbine performance. Considering suitable manufacturing tolerances for each wind turbine enables forming a tailored turbine "DNA" which can be regarded as a unique map of characterizing turbine parameters. Having knowledge about manufacturing tolerances of each wind turbine, a given turbine model can be fed with the manufacturing tolerances to determine whether a specific wind turbine is able to produce more power compared to only considering nominal parameters. The determination whether or not a turbine is able to be controlled with improved control parameters to calculate its theoretical power output at a given wind speed will be derived from the associated power versus wind speed map which can be derived from the output of the given turbine model which processes the one or more manufacturing tolerances of the respective wind turbines as input parameters.

Hence, the actual manufacturing tolerances are considered in a turbine model to derive actual and turbine specific control parameters from an associated power versus wind speed map. This mechanism on power maximization by using the given turbine model does not have negative impact to the existing turbine structure, such as generator, power and blades, etc. as their operation is considering actual manufacturing parameters. Tolerances are usually specified in a small band to ensure operation close to nominal but there is always a cost implication.

Where the actual values achieved within the manufacturing tolerance range of a specific wind turbine are, for example, better than the nominal parameters on which they are ordinary operated, it is possible - while providing a save mechanism without damaging the wind turbine - of making use of this additional margin resulting in higher AEP levels. Hence, considering the manufacturing tolerances allows an operation of the wind turbines in an optimized manner based on its DNA.

At present, when siting wind turbines within a wind park, the individual turbines are not chosen for a bespoke position. This means that manufacturing variances are not taken into account when siting the wind turbine in the wind park.

By using the turbine model and considering turbine-specific characteristics by including manufacturing tolerances as inputs to the turbine model, a performance measure can be determined which is used to find an optimal position within the wind park. The decision, where to place which turbine in the wind park can be made as to the most advantageous siting position for each individual wind turbine based on its potential performance at that position. This leads to a higher AEP of the wind park for no increase in the wind park cost.

According to a preferred embodiment, wind turbines having a performance measure falling within a first range of performance measures are preferably placed at a front edge of the wind park with the prevailing winds. Correspondingly, wind turbines having a performance measure falling within a second range of performance measures are preferably placed behind a front edge of the wind park with the prevailing winds. Whether wind turbines with a specific performance measure fall within the first range or the second range of performance measures may be decided by a comparison of the performance measure and the borders of the first and second ranges.

According to a preferred embodiment, the determination of the performance measure of a respective wind turbine comprises the following steps: determining a performance envelope from its associated power versus wind speed map; and determining the performance measure from the performance envelope. The performance measure may be calculated from the borders of the performance envelope by a given function. For example, the performance measure may be calculated as a mean from the borders of the performance envelope at a specific wind speed.

According to a preferred embodiment, assigning a selected siting position for each wind turbine in the wind park comprises the steps of iteratively determining the energy production for a particular arrangement of the turbines in the wind park with given foundation locations; choosing the arrangement of the turbines in the wind park having the maximum energy production; and assigning a selected siting position for each wind turbine in the wind park according to the chosen arrangement.

According to a preferred embodiment, the turbine model is a physical model which is based on a number of equations found by simulations and/or validated test data and/or look-up tables. The turbine model may, in addition, consider a number of measured performance parameters, such as temperatures, current load profile, etc. to determine the power versus wind speed map for a specific wind turbine.

The one or more manufacturing tolerances may be received, by the interface, from a database. The interface and the processing unit are part of a computer system. The computer system may be part of a controlling instance of the wind turbine. Alternatively, the computer system may be part of an external controlling system. The database may be stored on that computer system or may be an external database connected to the computer system. The one or more manufacturing tolerances may be obtained by measurement during the manufacturing process and collated, for each of the number of wind turbines, in the database.

The one or more characteristic values of a specific wind turbine include one or more of: an airgap (between a rotor and a stator), a magnet performance, a magnet dimension, a thermal conductivity, and a coil resistance. In addition to the characteristic values, further characteristic values may be considered as well, such as variations of coil segments and so on.

According to a further preferred embodiment, the turbine model considers a drive train consisting of a rotor hub, a generator, a converter, and a transformer of the wind turbine. In addition or alternatively, the turbine model may consider blades and/or gearbox and/or nacelle and/or tower and/or cable and/or a transformer of a specific wind turbine.

According to a second aspect of the present invention, a computer program product directly loadable into the internal memory of a digital computer is suggested, comprising software code portions for performing the steps of the method described herein when said product is run on a computer. The computer program product may be in the form of a storage medium, such as a CD-ROM, DVD, USB-stick or a memory card. The computer program product may also be in the form of a signal which is transferable via a wired or wireless communication line.

According to a third aspect, a system for computer-implemented maximization of annual energy production of a number of wind turbines of a wind park is suggested. The system comprises an interface which is adapted to receive one or more manufacturing tolerances of characteristic values for each of the number of wind turbines, and a processing unit which is adapted to determine, for each of the number of wind turbines, a power versus wind speed map which is calculated from a given turbine model with one or more manufacturing tolerances of the respective wind turbines as input parameters, determine, based on the power versus wind speed map of each of the number of wind turbines a respective performance measure; and assign a selected siting position for each wind turbine in the wind park according to its determined performance measure.

The invention will be explained in more detail by reference to the accompanying figures.
- Fig. 1: shows a schematic diagram illustrating the steps for determination of improved control parameters of wind turbines by considering bespoke manufacturing parameters.
- Fig. 2: illustrates a schematic diagram illustrating a turbine model which is used to determine improved control parameters of a wind turbine.
- Fig. 3: illustrates a block diagram illustrating the process of siting a plurality of wind turbines in a wind park.

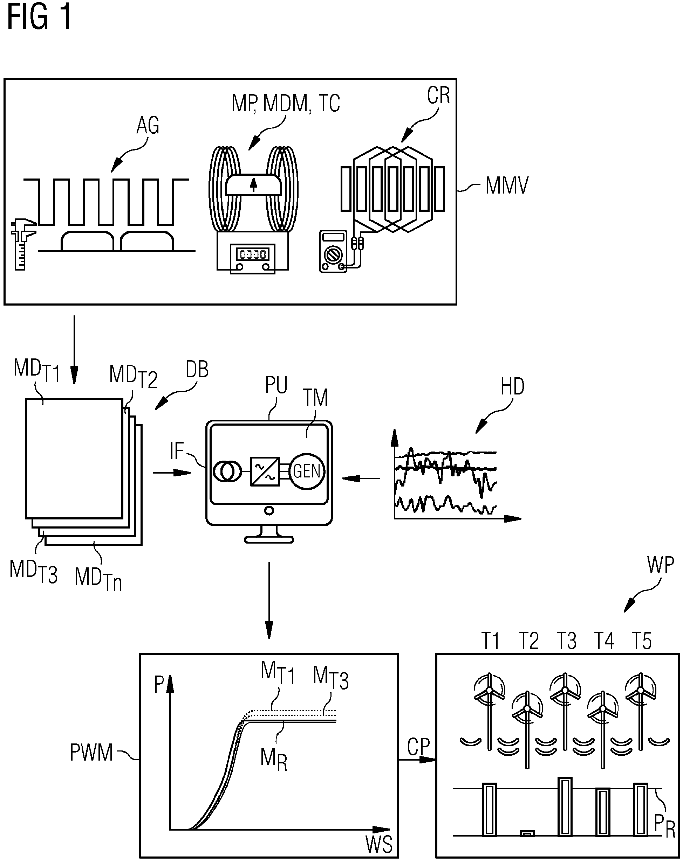

Fig. 1 shows a schematic diagram illustrating the steps to determine improved control parameters of a number of wind turbines T1, ..., Tn to be placed in a wind park WP. The number of wind turbines T1, ..., Tn of the wind park WP may be arbitrary. The number of wind turbines T1, ..., Tn may be two (2) or more. The number of wind turbines will be arranged in proximity to each other, to supply the total produced power at a single point to an energy grid.

The method considers the impact of individual turbine manufacturing tolerances on the turbine performance, thereby avoiding under-utilization of those wind turbines. Due to the consideration of individual turbine manufacturing tolerances, at least some of them are able to be operated in an optimized manner resulting in an increasing AEP of the wind park.

Referring to Fig. 1, in a first or preparing step, measurement of manufacturing data MMV is executed. Manufacturing tolerances having an impact on the turbine performance are, for example, an airgap AG, a magnet performance MP (as a result of the magnet material and/or dimensions MDM and/or manufacturing processes), thermal conductivity TC, and coil resistance CR. Each of these manufacturing tolerances are characteristic values which are individual for each turbine to be considered. The manufacturing tolerances of these characteristic values AG, MP, MDM, TC, CR do have an immediate impact on the turbine performance.

The manufacturing tolerances, typically different for every turbine (turbine DNA), of the characteristic values AG, MP, MDM, TC, CR are collated and stored in a database DB. For each turbine T1, ..., Tn (where n corresponds to the number of wind turbines in the wind park WP), a manufacturing dataset MD_{T1}, ..., MD_{Tn} may be stored containing the characteristic values AG, MP, MDM, TC, CR. The manufacturing dataset MD_{T1}, ..., MD_{Tn} may be regarded as DNA of each individual wind turbine T1, ..., Tn. It is to be understood that, for the present invention, storing of manufacturing data consisting of the manufacturing tolerances of characteristic values AG, MP, MDM, TC, CR may be made in any way, such as a lookup-table, associated maps, etc.

The manufacturing tolerances of the characteristic values AG, MP, MDM, TC, CR are received at the interface IF of a computer or computer system. The computer or computer system comprises the processing unit PU. The database DB may be stored in a memory of the computer (system) or an external storage of the computer (system). The database DB may be cloud based in another implementation. The processing unit PU is adapted to determine, for each of the number of wind turbines T1, ..., Tn, a power versus wind speed map M_{T1}, ..., M_{Tn}. The power versus wind speed map M_{T1}, ..., M_{Tn} is calculated from a given turbine model with the manufacturing tolerances of the characteristic values AG, MP, MDM, TC, CR of the respective wind turbines T1, ..., Tn as input parameters.

For each type of wind turbine, a specific turbine model may be provided. In an alternative embodiment, a specific turbine model may be used for a respective wind turbine of the wind park.

The turbine model is a physical model which is based on a number of equations and/or look-up tables found by simulations and/or validated test data. The turbine model can be regarded as a "digital twin" for each individual wind turbine. The power versus wind speed maps M_{T1}, ..., M_{Tn} of each individual wind turbine T1, ..., Tn are unique maps resulting from the turbine model and the manufacturing tolerances of the characteristic values AG, MP, MDM, TC, CR.

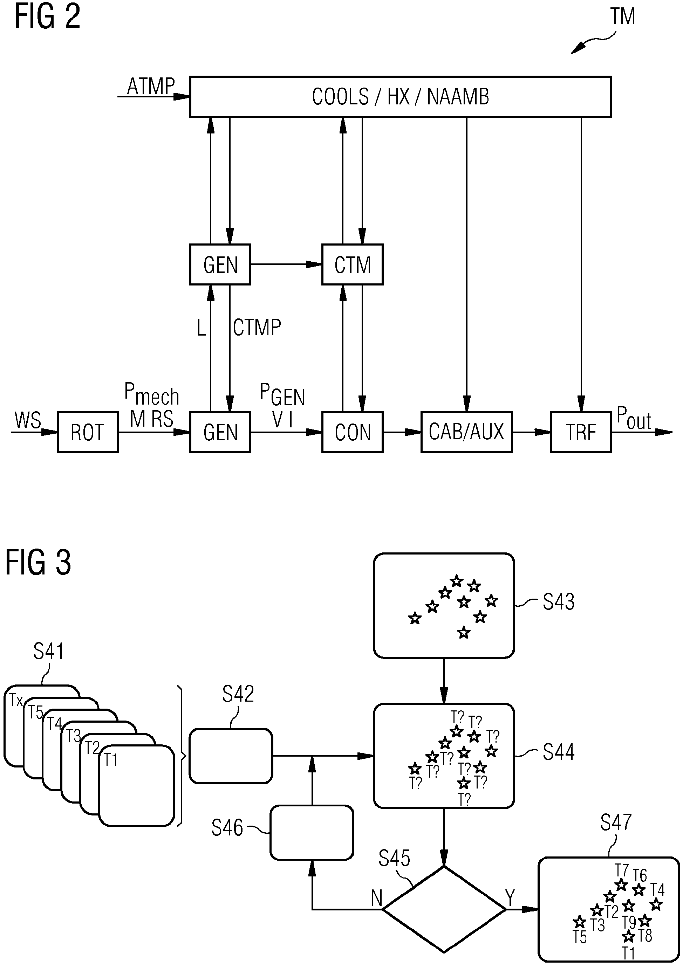

Fig. 2 illustrates an embodiment of the turbine model TM used to model an individual wind turbine. In this embodiment, the turbine model TM considers an electrical drive train of the wind turbines consisting of a rotor hub ROT, a generator GEN, a converter CON, cables CAB and auxiliary/ancillary components AUX, and a transformer TRF. However, the turbine model TM can also consider further components of the wind turbine, such as blades, nacelle, tower, sub-stations, gearbox (for geared-drive turbine) and so on.

The turbine model TM calculates the losses of components within the drive train to account for the loss in pow-er/energy between the turbine blade input and the output to grid during the electromechanical energy conversion and ancillary or supporting systems. As the loss mechanisms are temperature dependent and themselves generate heat, the turbine model TM is coupled or includes a thermal model for the generator GEN (generator thermal model GTM) and/or a thermal model for the converter CON (converter thermal model CTM) and is solved iteratively. The generator thermal model GTM and the converter thermal model CTM are coupled to components affecting the cooling of the drive train, such as cooling system COOLS (e.g. cooling fans), heat exchanger HX, and nacelle ambient NAAMB.

The turbine model TM calculates the available power Pₒᵤₜ at the (grid) output based on the input ambient conditions of wind speed WS and temperature ATMP. The turbine model TM can be used to assess the potential AEP for a given wind turbine and site by inputting historical and/or predicted wind conditions over a given period of time. The use of the thermal models GTM, CTM allows for any control features such as high temperature curtailment to be accounted for accurately.

The turbine model TM can be implemented in a number of different environments/programming codes. Typically, it may be based on iterative solver routines to handle both thermal coupling and control algorithms. Where possible, reduced order models, look-up tables or functions (equations) are used to represent complex behaviors using suitable approximations and/or assumptions to ensure short computation times whilst maintaining a suitable level of accuracy.

The turbine model TM, as shown in Fig. 2, may be extended to include blade models and/or structural models of the turbine. Such a model can be used to represent any electrical drive/generator system beyond the wind turbine.

More detailed the turbine model TM includes the following sub-models:
A rotor model for modelling the rotor ROT by converting wind speed WS into a rotor/blade rotational speed RS and mechanical power P_{mech} (i.e. input torque M) .

An optional bearing model for modelling the bearing by accounting for non-ideal main bearings and hence power loss.

A generator model for modelling the generator GEN by considering the main mechanical to electrical energy conversion accounting for the torque capability, voltage production and losses incurred in conversion. This may be implemented by a numerical computation of the electromagnetic performance (e.g. Finite Element Analysis), an analytical model, or a hybrid of these which uses a Reduced Order Model (ROM) in which the generator performance is derived through a-priori numerical modelling and distilled into simpler functions or look-up tables. The generator model is also adapted to calculate losses incurred in the conversion such as winding copper losses, stator electrical steel iron losses. It accounts for control decisions.

A converter model for modelling the converter CON: In a direct drive permanent magnet generator the variable frequency output of the generator is interfaced with the fixed frequency grid via a power electronic converter (active rectifier - DC link - inverter) which allows for control of the generator operating conditions. The load dependent switching and conduction losses in the converter are accounted for.

A cable loss model for modelling the cables CAB by consideration of Ohmic losses in connections cables.

An auxiliary/ancillary loss model for modelling auxiliary/ancillary components AUX by accounting for power consumed by supporting services such as cooling fans, pumps and hydraulic control systems as these losses detract from the available power at the grid.

A transformer loss model for modelling the transformer TRF by accounting for Ohmic winding losses and core losses which are dependent on load conditions.

Thermal models of the generator GEN and the converter CON: The performance and losses of the above components are temperature dependent. For example, the resistance and hence copper losses produced by the stator electrical windings increase due to the copper resistivity dependence on temperature and the flux produced by a permanent magnet (the field source in the generator) varies due to changes in the material remanence with temperature. As the losses themselves increase component temperature the above loss models are calculated iteratively with the respective thermal model GTM, CTM. As with the generator model, this may be implemented by a Reduced Order model using parameters derived from numerical modelling e.g. CFD and Thermal FEA to create an equivalent circuit or lumped parameter network.

A number of maps M_{R}, M_{T1} and M_{T3} is illustrated in the P-WS-diagram (power versus wind speed map PWM). In this diagram, a map M_{R} of a wind turbine which is calculated based on nominal parameters (characteristic values) and two maps M_{T1} and M_{T3} for turbines T1, T3 are illustrated. By way of example only, the maps M_{T1} and M_{T3} of the turbines T1, T3 show that (at least some of) the manufacturing tolerances of the characteristic values AG, MP, MDM, TC, CR are less than that of the nominal turbine resulting in an additional power P for a given speed WS.

Based on their associated power versus wind speed maps control parameters CP can be derived for each individual turbine which are used for controlling the wind turbines. AEP across the wind park WP can be maximized if the potential power capabilities of the wind turbines T1, ..., T5 is considered for a bespoke position in the wind park WP.

The turbine model TM which processes the manufacturing tolerances of characteristic values AG, MP, MDM, TC, CR as inputs to the model enables the evaluation of a performance envelope of each turbine. More detailed, the performance envelope of each wind turbine T1, ..., Tn is determined from its associated power versus wind speed map PWM. Knowing the performance envelope of a specific turbine allows determining a performance measure. Based on the performance measure a selected siting position for each wind turbine T1,...,Tn in the wind park can be determined. Whether wind turbines with a specific performance measure fall within first range (e.g. of more powerful turbines) or the second range (e.g. of nominal turbines) of performance measures may be decided by a comparison of the performance measure and the borders of the first and second ranges. Further increments of range may be considered as appropriate for the size of the wind park and variation in manufactured properties within the tolerance range.

Thus, a decision can be made as to the most advantageous siting position for each individual wind turbine in the wind park based on its potential performance at that position.

An evaluation has shown that an optimization process with regard to the siting position for each individual wind turbine T1,...,Tn is able to produce an extra AEP. According to this optimization process, stronger turbines are placed at a location where statistically the wind is strong, i.e. at the front edge of the wind park with the prevailing winds. Turbines with nominal performance are placed at a location where statistically the wind is weak, e.g. in the middle of the wind park.

The optimization is based on a comparison of manufacturing tolerances which are used, by the turbine model, to evaluate the performance envelope of each turbine. As a result, the optimal location of each wind turbine in the wind park can be determined. This leads to a higher energy production across the wind park and thus increasing AEP for no increase in the wind park cost.

Although it is preferred to consider manufacturing tolerances of components in the electrical drive train, the turbine model can also consider the whole turbine including blades, tower, bearing, converter and so on.

In the illustration of Fig. 1, the wind park consists of five turbines T1, ..., T5. The actual power output P1, ..., P5 in relation to a rated output P_{R} of a turbine with nominal characteristic values is indicated below the turbines T1, ..., T5. As can easily be seen, turbines T1, T3 and T5 generate a power output PI, P3, P5 which is above the rated output of a turbine with nominal characteristic values. These turbines are placed at a location where statistically the wind is strong. Power output P4 of wind turbine T4 corresponds to the rated output of a turbine with nominal characteristic values. This means, that the manufacturing tolerances of wind turbine T4 is within the specification but not better. This turbine is placed at a location where statistically the wind is weak.

Fig. 3 illustrates a block diagram illustrating the process of siting a plurality of wind turbines in a wind park. In step S41 a plurality of wind turbines T1,...,Tx (where x > 1) is provided and stored for installation in the wind park. Each of the wind turbines T1,...,Tx has performance variations due to manufacturing tolerances. In step S42, for each of the wind turbines T1,...,Tx, digital twins are provided in which the manufacturing tolerances are input in the turbine model as described above. In step S43 foundation locations based on nominal performance and environmental requirements of the number x of turbines are determined or provided. In step S44 the energy production for a particular arrangement of the turbines T1 to Tx is calculated. If, in step S45, a maximum energy production is found ("Y") then, in step S47, this specific turbine locations are chosen to maximize AEP. If, in step S45, no maximum energy production is found ("N") then, in step S46, a different arrangement of turbines is determined, and steps S44 and S45 are repeated in an iterative manner.

Consideration of the impact of individual turbine manufacturing tolerances on the turbine performance and using them in a turbine model for each individual turbine allows for maximizing of an AEP through a wind park optimization by operating the turbines in an optimized manner at each location based on its individual turbine performance.

If the achieved or actual parameters within a manufacturing tolerance band of a specific turbine are better than the nominal data on which they are ordinary operated, the turbine model TM can provide a safe mechanism of making use of this additional margin with the result of producing higher AEP levels.

## Claims

**1.** A method for computer-implemented maximization of annual energy production of a number of wind turbines (T1,...,Tn) of a wind park, comprising the steps of:
S1) receiving, by an interface (IF), one or more actual manufacturing tolerances of characteristic values (AG, MP, MDM, TC, CR) for each of the number of wind turbines (T1,...,Tn);
S2) determining, for each of the number of wind turbines (T1,...,Tn), by a processing unit (PU), a power versus wind speed map (PWM) which is calculated from a given turbine model (TM) with the one or more actual manufacturing tolerances of the respective wind turbines (T1,...,Tn) as input parameters;
S3) determining, by the processing unit (PU), based on the power versus wind speed map (PWM) of each of the number of wind turbines (T1,...,Tn) a respective performance measure; and
S4) assigning, by the processing unit (PU), a selected siting position for each wind turbine (T1,...,Tn) in the wind park according to its determined performance measure.

**2.** The method according to claim 1, wherein wind turbines (T1,...,Tn) having a performance measure falling within a first range of performance measures are preferably placed at a front edge of the wind park with the prevailing winds.

**3.** The method according to claim 1 or 2, wherein wind turbines (T1,...,Tn) having a performance measure falling within a second range of performance measures are preferably placed behind a front edge of the wind park with the prevailing winds.

**4.** The method according to one of the preceding claims, wherein determining the performance measure of a respective wind turbine (T1,...,Tn) comprises the steps of S3a)
determining a performance envelope from its associated power versus wind speed map (PWM); and
S3b) determining the performance measure from the performance envelope.

**5.** The method according to one of the preceding claims, wherein assigning a selected siting position for each wind turbine (T1,...,Tn) in the wind park comprises the steps of
S4a) iteratively determining the energy production for a particular arrangement of the turbines (T1,...,Tn) in the wind park with given foundation locations;
S4b) choosing the arrangement of the turbines (T1,...,Tn) in the wind park having the maximum energy production;
S4c) assigning a selected siting position for each wind turbine (T1,...,Tn) in the wind park according to the chosen arrangement.

**5.** The method according to one of the preceding claims, wherein the turbine model (TM) is a physical model which is based on a number of equations found by simulations and/or validated test data and/or look-up tables.

**6.** The method according to one of the preceding claims, wherein the one or more actual manufacturing tolerances are received, by an interface (IF), from a database (DB).

**7.** The method according to one of the preceding claims, wherein the one or more actual manufacturing tolerances are obtained by measurement.

**8.** The method according to one of the preceding claims, wherein the one or more characteristic values (AG, MP, MDM, TC, CR) includes one or more of:
- airgap (AG);
- magnet performance (MP);
- magnet dimension (MDM);
- thermal conductivity (TC);
- coil resistance (CR).

**9.** The method according to one of the preceding claims, wherein the turbine model (TM) considers a drive train consisting of a rotor hub, a generator, a converter and a transformer, of the wind turbine.

**10.** The method according to one of the preceding claims, wherein the turbine model (TM) considers blades and/or gearbox and/or nacelle and/or tower and/or cable and/or a transformer of the wind turbine.

**11.** A computer program product directly loadable into the internal memory of a digital computer, comprising software code portions for performing the steps of one of the preceding claims when said product is run on a computer.

**12.** A system for computer-implemented maximization of annual energy production of a number of wind turbines (T1,...,Tn) of a wind park, comprising
an interface (IF) adapted to:
- receive one or more actual manufacturing tolerances of characteristic values (AG, MP, MDM, TC, CR) for each of the number of wind turbines (T1,...,Tn); and
a processing unit (PU) adapted to:
- determine, for each of the number of wind turbines (T1,...,Tn), a power versus wind speed map (PWM) which is calculated from a given turbine model (TM) with the one or more actual manufacturing tolerances of the respective wind turbines (T1,...,Tn), as input parameters;
- determine, based on the power versus wind speed map (PWM) of each of the number of wind turbines (T1,...,Tn) a respective performance measure; and
- assign a selected siting position for each wind turbine (T1,...,Tn) in the wind park according to its determined performance measure.
